# EUROPÄISCHE PATENTSCHRIFT

(11) **EP 3 819 136 B1**
(45) Veröffentlichungstag und Bekanntmachung des Hinweises auf die Patenterteilung: **10.05.2023**
(21) Anmeldenummer: 20205928.3
(22) Anmeldetag: 05.11.2020
(51) Int. Cl.: B60B 27/00, B60B 27/06, B60B 35/12

(54) **RADLAGEREINHEIT FÜR EIN KRAFTFAHRZEUG SOWIE VERFAHREN ZUM HERSTELLEN EINER RADLAGEREINHEIT**
WHEEL BEARING UNIT FOR A MOTOR VEHICLE AND METHOD FOR MANUFACTURING A WHEEL BEARING UNIT
UNITÉ DE ROULEMENT DE ROUE POUR UN VÉHICULE À MOTEUR ET PROCÉDÉ DE FABRICATION D'UNE UNITÉ DE ROULEMENT DE ROUE

(30) Priorität: 11.11.2019 DE 102019130321
(43) Veröffentlichungstag der Anmeldung: 12.05.2021
(73) Patentinhaber: Audi AG, 85045 Ingolstadt (DE)
(72) Erfinder: Albl, Johannes, 85055 Ingolstadt (DE); Frisch, Michael, 94513 Schönberg (DE)

(56) Entgegenhaltungen:
- DE-A1- 10 029 100
- DE-A1-102006 034 039
- DE-A1-102020 100 511
- DE-B4-102006 034 039
- US-A1- 2005 206 223

## Beschreibung

Die Erfindung betrifft eine Radlagereinheit für ein Kraftfahrzeug, mit einer Radnabe, einem Radlagerflansch und einem Radlager zur Drehlagerung der Radnabe an dem Radlagerflansch, wobei die Radnabe eine Durchgangsöffnung zur Aufnahme eines mittels eines Schraubverbindungselements an der Radnabe befestigten Wellenzapfens aufweist und an einer die Durchgangsöffnung begrenzenden Innenumfangsfläche eine Innenverzahnung zum drehfesten Zusammenwirken mit einer Außenverzahnung des Wellenzapfens ausgebildet ist, und wobei die Durchgangsöffnung unter Ausbildung einer Mündungsöffnung eine zur Anlage einer Anlagefläche des Schraubverbindungselements ausgebildete Anlageschulter durchgreift. Die Erfindung betrifft weiterhin ein Verfahren zum Herstellen einer Radlagereinheit.

Aus dem Stand der Technik ist beispielsweise die Druckschrift DE 103 38 172 B3 bekannt. Diese beschreibt eine Radnaben-Drehgelenk-Anordnung, welche eine Radnabe mit einem Radflansch und ein mittels einer zentralen Schrauben-Mutter-Verbindung mit der Radnabe verbindbares Drehgelenk zum Anschließen einer Antriebswelle umfasst. Die Radnabe weist einen zentralen Durchtritt mit einer flanschseitigen Öffnung mit kleinerem Durchmesser und einer gelenkseitigen Öffnung mit größerem Durchmesser auf, wobei die flanschseitige Öffnung von einer Schraube oder einem Gewindestift der Schrauben-Mutter-Verbindung durchsetzt ist. In der gelenksseitigen Öffnung ist eine Innenverzahnung vorgesehen, in die ein Zapfen des Drehgelenks mit einer entsprechenden Außenverzahnung eingreift.

Weiterhin zeigt die Druckschrift DE 10 2004 054 907 A1 eine Radnaben-Gleichlaufdrehgelenk-Einheit, bei welcher eine Radnabe mit einer Durchgangsöffnung, die eine innere Wellenverzahnung trägt, mit dem Gelenkaußenteil eines Gleichlauffestgelenks verspannt ist, an dem ein Zapfen mit einer äu-ßeren Wellenverzahnung angeformt ist, wobei innere Wellenverzahnung der Durchgangsöffnung und äußere Wellenverzahnung des Zapfens ineinandergreifen, und ein zweireihiges Radlager auf die Radnabe aufgeschoben ist, die einen inneren Lagerring umfasst, an dem sich eine Stirnfläche des Gelenkaußenteils unmittelbar abstützt, wobei die Hälfte der Summe aus Teilkreisdurchmesser der Gelenkkugeln und Lagerbreite größer ist als der Mittenabstand zwischen Gleichlaufdrehgelenk und Radlager.

Die Druckschrift DE 10 2006 034 039 A1 zeigt eine Radnaben-Drehgelenk-Anordnung, umfassend eine drehbar gelagerte Radnabe mit einem Radflansch zur Anschraubung eines Fahrzeugrades, die eine zentrale Durchgangsöffnung mit einer inneren Wellenverzahnung aufweist, ein Drehgelenk mit einem Gelenkaußenteil, an dem ein Antriebszapfen mit einer äußeren Wellenverzahnung angesetzt ist, wobei der Antriebzapfen in die Durchgangsöffnung eingesteckt ist und Radnabe und Gelenkaußenteil mittels der ineinandergreifenden inneren und äußeren Wellenverzahnungen drehfest miteinander verbunden sind, wobei axiale Verspannmittel zwischen der Radnabe und dem Gelenkaußenteil wirksam sind, und mit einem zweireihigen Wälzlager, das zumindest einen auf die Radnabe aufgeschobenen Lagerinnenring aufweist, der von einer Aufbördelung am gelenkseitigen Ende der Radnabe axial gehalten wird, wobei der Eingriff der inneren und äußeren Wellenverzahnungen in seiner axialen Erstreckung vom Radflansch aus betrachtet, so begrenzt ist, dass die Radnabe zumindest innerhalb eines gelenkseitigen aufgeschobenen Lagerinnenringes radial vom Antriebszapfen freigestellt ist.

Weiterhin sind aus dem Stand der Technik die Druckschriften DE 100 29 100 A1 und US 2005/206223 A1 bekannt.

Es ist Aufgabe der Erfindung, eine Radlagereinheit für ein Kraftfahrzeug vorzuschlagen, welche gegenüber bekannten Radlagereinheiten Vorteile aufweist, insbesondere eine einfache und kostengünstige Herstellung bei gleichzeitig äußerst geringem Gewicht der Radlagereinheit ermöglicht.

Dies wird erfindungsgemäß mit einer Radlagereinheit für ein Kraftfahrzeug mit den Merkmalen des Anspruchs 1 erzielt. Dabei ist vorgesehen, dass die Anlageschulter zumindest teilweise von Zähnen der Innenverzahnung gebildet ist, die an der Innenumfangsfläche bis hin zu der Mündungsöffnung ausgebildet ist, sodass ein Innendurchmesser der Mündungsöffnung mindestens einem Kopfkreisdurchmesser der Innenverzahnung entspricht und kleiner als ein Fußkreisdurchmesser der Innenverzahnung ist, und dass die Innenverzahnung über einen in der Mündungsöffnung vorliegenden ersten Verzahnungsbereich und einen in axialer Richtung bezüglich einer Längsmittelachse der Durchgangsöffnung von dem ersten Verzahnungsbereich beabstandeten zweiten Verzahnungsbereich verfügt, zwischen welchen ein Teilabschnitt der Durchgangsöffnung mit einem Innendurchmesser ausgebildet ist, der größer ist als der Kopfkreisdurchmesser der Innenverzahnung.

Die Radlagereinheit ist vorzugsweise Bestandteil einer Radaufhängung. Die Radaufhängung dient der Anbindung eines Rads an eine Karosserie des Kraftfahrzeugs. Hierzu ist die Radaufhängung vorzugsweise Bestandteil des Kraftfahrzeugs. Die Radaufhängung ist bevorzugt zur Aufhängung, insbesondere zur federnden Aufhängung des Rads bezüglich der Karosserie vorgesehen und ausgebildet. Das Rad ist an einem Radträger der Radaufhängung drehbar gelagert oder zumindest lagerbar. Hierzu ist das Rad an der Radnabe befestigt oder befestigbar, welche schlussendlich an dem Radträger drehbar gelagert ist, nämlich mittels des Radlagers. Die Radlagereinheit ist hierbei über ihren Radlagerflansch an den Radträger angebunden beziehungsweise an ihm befestigt. Die Radnabe kann Bestandteil des Radlagers sein beziehungsweise integriert mit ihm ausgebildet sein. Beispielsweise ist hierzu die Radnabe mit dem Innenring oder dem Außenring des Radlagers einstückig und/oder materialeinheitlich ausgestaltet, wohingegen der jeweils andere Ring, also entweder der Außenring oder der Innenring, an dem Radlagerflansch befestigt oder wiederum einstückig und/oder materialeinheitlich mit ihm ausgestaltet ist.

Der Radlagerflansch weist beispielsweise eine Radlageraufnahme auf, welche als Öffnung, insbesondere als randgeschlossene Öffnung, in dem Radlagerflansch ausgestaltet ist. In der Radlageraufnahme ist zumindest bereichsweise das Radlager angeordnet. Zudem greift die Radnabe und/oder ein mit ihr drehfest gekoppelter Wellenzapfen wenigstens bereichsweise in die Radlageraufnahme ein. Besonders bevorzugt durchgreifen die Radnabe und/oder der Wellenzapfen, insbesondere gemeinsam, die Radlageraufnahme in axialer Richtung bezüglich der Drehachse der Radnabe zumindest teilweise, insbesondere vollständig.

Der Wellenzapfen dient dem Antreiben der Radnabe, nämlich einem Drehantreiben der Radnabe bezüglich des Radlagerflanschs und mithin des Radträgers. Hierzu sind der Wellenzapfen und die Radnabe drehfest gekoppelt. Beispielsweise ist der Wellenzapfen Bestandteile eines Drehgelenks, über welches eine Antriebswelle drehfest an die Radnabe angebunden ist. Das Drehgelenk ermöglicht ein Verschwenken beziehungsweise Verkippen der Antriebswelle bezüglich der Radnabe, sodass eine Ausgleichsbewegung zugelassen wird, welche beispielsweise bei einem Einfedern des Rads bezüglich der Karosserie auftritt. Der Wellenzapfen des Drehgelenks greift nach Art eines Zapfens in die Radnabe ein und ist dort mittels einer Verzahnung drehfest mit ihr gekoppelt.

Das Radlager verfügt über den Innenring und den Außenring, welche drehbar zueinander angeordnet sind. Der Innenring ist vorzugsweise der Radnabe zugeordnet, insbesondere mit der Radnabe verbunden, beispielsweise ist er einstückig mit ihr ausgestaltet oder an ihr befestigt, wohingegen der Außenring dem Radlagerflansch und entsprechend dem Radträger zugeordnet ist, insbesondere über den Radlagerflansch mit dem Radträger verbunden ist, zum Beispiel an ihm befestigt ist. Dabei liegt der Außenring bevorzugt in der Radlageraufnahme vor. Anders ausgedrückt liegt der Außenring mit seiner Außenumfangsfläche an einer die Radlageraufnahme begrenzenden Innenumfangsfläche des Radlagerflanschs an. Selbstredend kann auch die umgekehrte Ausgestaltung realisiert sein, bei welcher der Innenring drehfest mit dem Radlagerflansch und der Außenring drehfest mit der Radnabe verbunden ist.

Besonders bevorzugt ist das Radlager als Wälzlager ausgebildet und verfügt insoweit über Wälzkörper, welche zur Reibungsreduzierung zwischen dem Innenring und dem Außenring angeordnet sind.

Der Radträger, welcher vorzugsweise nicht Bestandteil der Radlagereinheit ist, ist bevorzugt über wenigstens einen Fahrwerklenker mit der Karosserie verbunden. Der Fahrwerklenker greift also einerseits an der Karosserie und andererseits an dem Radträger an, insbesondere jeweils schwenkbeweglich. Der Fahrwerklenker liegt beispielsweise in Form eines Querlenkers vor. Auch eine Ausgestaltung als Längslenker ist jedoch möglich. Grundsätzlich erfolgt die Anbindung des Radträgers an die Karosserie über den wenigstens einen Fahrwerklenker. Bevorzugt sind jedoch mehrere Fahrwerklenker zur Anbindung des Radträgers an die Karosserie vorgesehen. Beispielsweise liegen wenigstens einer der Fahrwerklenker, mehrere der Fahrwerklenker oder alle der Fahrwerklenker jeweils in Form eines Zweipunktlenkers vor. Der Radlagerflansch ist nun mit dem Radträger verbunden und an ihm befestigt, insbesondere starr.

Die drehfeste Kopplung des Wellenzapfens mit der Radnabe wird über das Zusammenwirken der Innenverzahnung der Radnabe und der Außenverzahnung des Wellenzapfens erzielt. Die Innenverzahnung ist an der Innenumfangsfläche ausgebildet, welche die Durchgangsöffnung der Radnabe in radialer Richtung nach außen begrenzt, nämlich bezüglich der Längsmittelachse der Durchgangsöffnung, welche zudem der Drehachse der Radnabe bezüglich des Radlagerflanschs entspricht. Der Wellenzapfen greift in die Durchgangsöffnung ein und ist in dieser in axialer Richtung mittels des Schraubverbindungselements festgesetzt.

Das Schraubverbindungselement liegt zum Beispiel in Form einer Schraube oder einer Schraubenmutter vor. Die Schraube greift hierzu zum Festsetze des Wellenzapfens in axialer Richtung an dem Wellenzapfen an, insbesondere greift sie in ihn ein. Andererseits liegt ein Schraubenkopf der Schraube mit einer an ihm ausgebildeten Anlagefläche auf der dem Wellenzapfen abgewandten Seite der Schraube an der Anlageschulter der Radnabe an.

Hierdurch hält die Schraube den Wellenzapfen in wenigstens einer Richtung in der Radnabe und verhindert ein Herausbewegen des Wellenzapfens aus der Durchgangsöffnung in die von der Anlageschulter abgewandte Richtung.

Liegt das Schraubverbindungselement als Schraubenmutter vor, so ragt der Wellenzapfen aus der Durchgangsöffnung heraus, nämlich auf ihrer der Anlageschulter zugewandten Seite. Die Schraubenmutter ist auf der Wellenzapfen aufgeschraubt, sodass die an der Schraubenmutter ausgebildete Anlagefläche an der Anlageschulter der Radnabe anliegt. Hierdurch hält die Schraubenmutter den Wellenzapfen in wenigstens einer Richtung in der Radnabe und verhindert ein Herausbewegen des Wellenzapfens aus der Durchgangsöffnung in die von der Anlageschulter abgewandte Richtung.

Die Durchgangsöffnung durchgreift die Radnabe in axialer Richtung vollständig. Entsprechend durchgreift sie die Anlageschulter in axialer Richtung unter Ausbildung der Mündungsöffnung. Hierunter ist insbesondere zu verstehen, dass die Mündungsöffnung vollständig in einer gedachten Ebene liegt, welche zudem die gesamte Anlageschulter in sich aufnimmt. Diese gedachte Ebene steht bevorzugt senkrecht auf der Längsmittelachse der Durchgangsöffnung. Es sei darauf hingewiesen, dass die Radlagereinheit bevorzugt lediglich den Radlagerflansch, die Radnabe und das Radlager aufweist. Weitere Elemente sind nicht zwingend Bestandteil der Radlagereinheit. So sind der Wellenzapfen sowie das Schraubverbindungselement lediglich optional Bestandteil des Radlagerflanschs und diesem nicht zwingend zuzurechnen.

Um ein besonders einfaches und kostengünstiges Herstellen der Radlagereinheit und insbesondere der Radnabe zu ermöglichen, soll sich die Innenverzahnung an der Innenumfangsfläche bis hin zu der Mündungsöffnung erstrecken. Das bedeutet, dass die Anlageschulter für die Anlagefläche des Schraubverbindungselements zumindest teilweise von Zähnen der Innenverzahnung gebildet wird. Dies hat den Vorteil, dass die Größer der Anlagefläche bei gleichzeitig geringem Gewicht der Radnabe maximiert wird, und dass das Ausbilden der Innenverzahnung sehr kosteneffizient erfolgen kann, beispielsweise durch Räumen. Zur Ausbildung der Innenverzahnung wird hierbei ein Räumwerkzeug durch die Durchgangsöffnung hindurchgeführt, sodass die Innenverzahnung durch Spanen beziehungsweise Spanabtragen von Material der Radnabe erzeugt wird.

Zum Ausbilden der Innenverzahnung wird das Räumwerkzeug durch die gesamte Durchgangsöffnung hindurch bewegt, also insbesondere auch durch die Mündungsöffnung. Um dennoch eine hinreichend große Anlageschulter zu realisieren, soll die Innenverzahnung auch im Bereich der Mündungsöffnung vorliegen, sodass schlussendlich die Zähne der Innenverzahnung die Anlageschulter zumindest zum Teil bilden und mithin zum Abstützen der Anlagefläche beziehungsweise des Schraubverbindungselements dienen. Das bedeutet, dass der Innendurchmesser der Mündungsöffnung, also der kleinste Durchmesser der Mündungsöffnung über den gesamten Umfang hinweg gesehen zumindest dem Kopfkreisdurchmesser der Innenverzahnung entspricht oder größer ist als dieser. Gleichzeitig ist der Innendurchmesser der Mündungsöffnung kleiner als der Fußkreisdurchmesser der Innenverzahnung.

Grundsätzlich könnte es vorgesehen sein, die Innenverzahnung über die gesamte Erstreckung der Durchgangsöffnung in axialer Richtung an der Innenumfangsfläche auszubilden. Dies hat jedoch einen raschen Verschleiß des zur Herstellung der Innenverzahnung verwendeten Werkzeugs, insbesondere des Räumwerkzeugs, zur Folge. Aus diesem Grund ist es nun vorgesehen, dass die Innenverzahnung sich aus mehreren voneinander beabstandeten Verzahnungsbereichen zusammensetzt, nämlich zumindest aus dem ersten Verzahnungsbereich und dem zweiten Verzahnungsbereich.

Der erste Verzahnungsbereich liegt in der Mündungsöffnung vor beziehungsweise erstreckt sich in axialer Richtung bis in diesen hinein. In anderen Worten sind die die Anlageschulter zumindest teilweise ausbildenden Zähne dem ersten Verzahnungsbereich zugeordnet. In axialer Richtung beabstandet von dem ersten Verzahnungsbereich liegt der zweiter Verzahnungsbereich vor. Bevorzugt kämmt die Außenverzahnung des Wellenzapfens ausschließlich mit dem zweiten Verzahnungsbereich der Innenverzahnung, nicht jedoch mit dem ersten Verzahnungsbereich. Der zweite Verzahnungsbereich ist insoweit derart bemessen und ausgestaltet, dass er für eine alleinige Drehmomentübertragung zwischen dem Wellenzapfen und der Radnabe hinreichend ist.

Grundsätzlich ist die Innenverzahnung in dem ersten Verzahnungsbereich mit dem zweiten Verzahnungsbereich identisch ausgestaltet. Da jedoch der Wellenzapfen von dem ersten Verzahnungsbereich beabstandet ist und sich nicht bis hin zu diesem erstreckt, muss der Innendurchmesser der Mündungsöffnung nicht zwingend dem Kopfkreisdurchmesser der Innenverzahnung entsprechen, sondern er kann auch größer sein. Das bedeutet schlussendlich, dass die Innenverzahnung in dem ersten Verzahnungsbereich und dem zweiten Verzahnungsbereich den gleichen Fußkreisdurchmesser, den gleichen Grundkreisdurchmesser und den gleichen Teilkreisdurchmesser aufweist. Der Kopfkreisdurchmesser kann jedoch in dem ersten Verzahnungsbereich größer gewählt sein als in dem zweiten Verzahnungsbereich, sodass anders ausgedrückt der Innendurchmesser der Mündungsöffnung mindestens dem Kopfkreisdurchmesser der Innenverzahnung in dem zweiten Verzahnungsbereich entspricht oder größer ist als dieser.

Zwischen dem ersten Verzahnungsbereich und dem zweiten Verzahnungsbereich liegt der Teilabschnitt der Durchgangsöffnung. Das bedeutet, dass die beiden Verzahnungsbereiche auf in axialer Richtung gesehen gegenüberliegenden Seiten des Teilabschnitts vorliegen, also einerseits des Teilabschnitts der erste Verzahnungsbereich und andererseits des Teilabschnitts der zweite Verzahnungsbereich angeordnet ist. In dem Teilabschnitt weist die Durchgangsöffnung einen Innendurchmesser auf, der größer ist als der Kopfkreisdurchmesser der Innenverzahnung. In dem Teilabschnitt liegt die Innenverzahnung insoweit nicht oder mit vergrößertem Kopfkreisdurchmesser vor.

Dies dient zum einen einer Gewichtsreduzierung der Radnabe, weil in dem Teilabschnitt der Durchgangsöffnung nicht benötigtes Material von der Radnabe abgetragen wird. Zum anderen kann eine besonders werkzeugschonende Herstellung der Innenverzahnung erfolgen, nämlich sofern der gegenüber dem Kopfkreisdurchmesser der Innenverzahnung vergrößerte Innendurchmesser vor dem Herstellen der Innenverzahnung ausgebildet wird.

Beispielsweise erfolgt also in dem Teilabschnitt ein spanabtragendes Bearbeiten der Radnabe zur Durchmesservergrößerung der Durchgangsöffnung derart, dass der Innendurchmesser größer ist als der Kopfkreisdurchmesser der später ausgebildeten Innenverzahnung. Bei dem nachfolgenden Herstellen der Innenverzahnung wird aufgrund des vergrößerten Innendurchmessers des Teilabschnitts die Innenverzahnung nicht oder allenfalls teilweise ausgebildet, sodass die Belastung des Werkzeugs deutlich reduziert ist.

Eine Weiterbildung der Erfindung sieht vor, dass der Innendurchmesser des Teilabschnitts der Durchgangsöffnung zumindest bereichsweise mindestens dem Fußkreisdurchmesser entspricht, sodass die Innenverzahnung in dem Teilabschnitt unterbrochen ist. Der Innendurchmesser ist über die gesamte Erstreckung des Teilabschnitts in axialer Richtung größer als der Kopfkreisdurchmesser der Innenverzahnung. Zumindest abschnittsweise ist er jedoch derart gewählt, dass die Innenverzahnung vollständig unterbrochen ist, also nicht einmal ansatzweise Zähne der Innenverzahnung in dem Teilabschnitt vorliegen. Um dies zu erreichen wird der Innendurchmesser entsprechend groß gewählt, nämlich zumindest dem Fußkreisdurchmesser entsprechend oder sogar größer als dieser. Hierdurch wird eine besonders werkzeugschonende Herstellung der Innenverzahnung und eine besonders deutliche Gewichtsreduzierung der Radnabe erzielt.

Sofern im Rahmen dieser Beschreibung von dem Kopfkreisdurchmesser oder dem Fußkreisdurchmesser der Innenverzahnung die Rede ist, so ist stets der Kopfkreisdurchmesser beziehungsweise der Fußkreisdurchmesser in dem zweiten Verzahnungsbereich der Innenverzahnung gemeint, sofern auf nichts anderes hingewiesen wird.

Eine Weiterbildung der Erfindung sieht vor, dass sich der Innendurchmesser des Teilabschnitts ausgehend von dem ersten Verzahnungsbereich bis zu einem Maximaldurchmesser vergrößert, insbesondere kontinuierlich, und sich anschließend bis hin zu dem zweiten Verzahnungsbereich verkleinert, insbesondere kontinuierlich. Vorzugsweise entspricht der Innendurchmesser des Teilabschnitts auf Seiten des ersten Verzahnungsbereichs dessen Kopfkreisdurchmesser und andererseits auf Seiten des zweiten Verzahnungsbereichs dessen Kopfkreisdurchmesser.

In jedem Fall verändert sich der Innendurchmesser des Teilabschnitts über seine Erstreckung in axialer Richtung. So wird er ausgehend von dem ersten Verzahnungsbereich in Richtung des zweiten Verzahnungsbereichs zunächst größer, bis er den Maximaldurchmesser erreicht. Ausgehend von dem Maximaldurchmesser verkleinert er sich wieder, nämlich weiter in Richtung des zweiten Verzahnungsbereichs. Anders ausgedrückt vergrößert sich der Innendurchmesser jeweils ausgehend von dem ersten Verzahnungsbereich und dem zweiten Verzahnungsbereich bis hin zu dem Maximaldurchmesser, unter welchem der größte Innendurchmesser des Teilabschnitts über dessen gesamte Erstreckung in axialer Richtung zu verstehen ist.

Das Vergrößern des Innendurchmessers erfolgt bevorzugt kontinuierlich, also ohne eine zwischenzeitliche Verkleinerung. Besonders bevorzugt vergrößert sich der Innendurchmesser zudem stetig, also sprungfrei. Auch das Verkleinern des Innendurchmessers erfolgt vorzugsweise kontinuierlich und/oder stetig. Hierdurch wird eine Beeinträchtigung der Festigkeit der Radnabe durch den vergrößerten Innendurchmesser zuverlässig vermieden.

Eine Weiterbildung der Erfindung sieht vor, dass der Teilabschnitt eine Erstreckung in axialer Richtung aufweist, die einer Erstreckung des zweiten Verzahnungsbereichs in derselben Richtung entspricht oder größer oder kleiner ist, und/oder dass der erste Verzahnungsbereich eine Erstreckung in axialer Richtung aufweist, die kleiner ist als die Erstreckung des zweiten Verzahnungsbereichs oder des Teilabschnitts in derselben Richtung. Im Längsschnitt bezüglich der Längsmittelachse der Durchgangsöffnung gesehen, ist also der Teilabschnitt in axialer Richtung mindestens ebenso lang wie der zweite Verzahnungsbereich oder kleiner als dieser, wobei letzteres bevorzugt ist. Hierdurch wird eine besonders effektive Reduzierung des Gewichts der Radnabe realisiert.

Zusätzlich oder alternativ ist die Erstreckung des ersten Verzahnungsbereichs kleiner als die Erstreckung des zweiten Verzahnungsbereichs oder kleiner als die axiale Erstreckung des Teilabschnitts. Da der erste Verzahnungsbereich lediglich dem Bereitstellen der Anlageschulter dient, kann er mit einer vergleichsweise kleinen Erstreckung in axialer Richtung ausgestaltet sein und dennoch die an ihn gestellten Festigkeitsanforderungen erfüllen. Beispielsweise beträgt die Erstreckung des ersten Verzahnungsbereichs in axialer Richtung höchstens 25%, höchstens 20%, höchstens 15% oder höchstens 10% der Erstreckung des zweiten Verzahnungsbereichs in axialer Richtung. Auch dies dient der Realisierung eines geringen Gewichts der Radnabe.

Eine Weiterbildung der Erfindung sieht vor, dass der Wellenzapfen durch eine der Mündungsöffnung in axiale Richtung abgewandte weitere Mündungsöffnung in die Durchgangsöffnung eingreift und entweder beabstandet von der Mündungsöffnung endet oder die Durchgangsöffnung vollständig durchgreift und durch die Mündungsöffnung aus der Durchgangsöffnung herausragt. Die Durchgangsöffnung erstreckt sich im Längsschnitt insoweit ausgehend von der Mündungsöffnung bis hin zu der weiteren Mündungsöffnung und wird von diesen in gegenüberliegende Richtungen begrenzt. Die Mündungsöffnung liegt also einerseits und die weitere Mündungsöffnung andererseits der Durchgangsöffnung vor. Die Mündungsöffnung ist in Umfangsrichtung von der Anlageschulter umgriffen, vorzugsweise in Umfangsrichtung durchgehend. Die Anlageschulter ist hierzu ringförmig ausgestaltet und liegt weiter bevorzugt vollständig in der gedachten Ebene, in welcher auch die Mündungsöffnung vollständig aufgenommen ist.

Über die Mündungsöffnung geht die Durchgangsöffnung beispielsweise in eine Schraubverbindungsaufnahme der Radnabe über, welche einen größeren Durchmesser aufweist als die Durchgangsöffnung. Vorzugsweise ist der Durchmesser der Schraubverbindungsaufnahme größer als der größte Innendurchmesser der Durchgangsöffnung über ihre Erstreckung in axiale Richtung hinweg. Die Schraubverbindungsaufnahme dient der Aufnahme eines Schraubenkopfs der Schraube oder der Aufnahme der Schraubenmutter.

Auf der der Schraubverbindungsaufnahme abgewandten Seite der Mündungsöffnung wird die Durchgangsöffnung von der weiteren Mündungsöffnung begrenzt. Durch diese weitere Mündungsöffnung greift der Wellenzapfen in die Durchgangsöffnung ein, nämlich derart, dass er - im Falle seiner Befestigung mittels der Schraube - beabstandet von der Mündungsöffnung endet. In anderen Worten durchgreift der Wellenzapfen die Durchgangsöffnung in axialer Richtung lediglich teilweise, beispielsweise lediglich bis zu dem Teilabschnitt der Durchgangsöffnung. Die Schraube hingegen greift durch die Mündungsöffnung in die Durchgangsöffnung ein. Ist der Wellenzapfen hingegen mit der Schraubenmutter befestigt, so greift er durch die weitere Mündungsöffnung in die Durchgangsöffnung ein und durchgreift sie vollständig, ragt also durch die Mündungsöffnung wieder aus der Durchgangsöffnung heraus. Die Schraubenmutter greift außerhalb der Durchgangsöffnung an dem Wellenzapfen an. Die beschriebene Ausgestaltung ermöglicht eine besonders kompakte Ausgestaltung der Radnabe.

Die Außenverzahnung des Wellenzapfens liegt in axialer Richtung gesehen in dem zweiten Verzahnungsbereich vor, endet jedoch vor dem ersten Verzahnungsbereich. Es kann hierbei vorgesehen sein, dass sich die Außenverzahnung in axialer Richtung lediglich teilweise durch den zweiten Verzahnungsbereich erstreckt und in diesem endet. Es kann auch vorgesehen sein, dass die Außenverzahnung mit dem zweiten Verzahnungsbereich oder in dem Teilabschnitt endet. Die Außenverzahnung erstreckt sich also in axialer Richtung nur über einen Teil des Wellenzapfens beziehungsweise endet beabstandet von einem freien Ende des Wellenzapfens.

Eine Weiterbildung der Erfindung sieht vor, dass der Wellenzapfen den zweiten Verzahnungsbereich vollständig durchgreift und in den Teilabschnitt der Durchgangsöffnung hineinragt, jedoch von dem ersten Verzahnungsbereich beabstandet endet. Hierauf wurde vorstehend bereits hingewiesen. Diese Ausgestaltung ermöglicht eine besonders effektive Drehmomentübertragung zwischen dem Wellenzapfen und der Radnabe, weil die gesamte Erstreckung des zweiten Verzahnungsbereichs in axialer Richtung ausgenutzt wird.

Eine Weiterbildung der Erfindung sieht vor, dass die weitere Mündungsöffnung vollständig in einer gedachten Ebene liegt, die senkrecht auf der Längsmittelachse seht, wobei die gedachte Ebene eine Anlagefläche für eine den Wellenzapfen aufweisende Kopplungseinrichtung vollständig aufnimmt und in axialer Richtung von dem zweiten Verzahnungsbereich beabstandet angeordnet ist. Die Kopplungseinrichtung dient insbesondere der drehfesten Verbindung der Radnabe mit der vorstehend bereits erwähnten Antriebswelle. Die Kopplungseinrichtung kann beispielsweise in Form des Schwenklagers vorliegen. Der Wellenzapfen ist hierbei Bestandteil der Kopplungseinrichtung.

Die Kopplungseinrichtung ist in axialer Richtung bezüglich der Radnabe mittels des Schraubverbindungselements festgesetzt. Hierzu liegt die Kopplungseinrichtung einerseits an der Anlagefläche an und wird von dem Schraubverbindungselement an diese gedrängt. Andererseits liegt das Schraubverbindungselement mit seiner Anlagefläche an der Anlageschulter an, sodass schlussendlich die Radnabe zwischen der Kopplungseinrichtung und dem Schraubverbindungselement klemmend gehalten ist. Zusätzlich ist die Kopplungseinrichtung durch das Zusammenwirken der Innenverzahnung mit der Außenverzahnung in Umfangsrichtung bezüglich der Radnabe festgesetzt.

Die Anlagefläche liegt in der gedachten Ebene, in welcher auch die weitere Mündungsöffnung angeordnet ist. Die gedachte Ebene steht zudem senkrecht auf der Längsmittelachse. Durch das lediglich teilweise Durchgreifen der Durchgangsöffnung durch die Kopplungseinrichtung beziehungsweise ihren Wellenzapfen wird bei gleichzeitig hinreichender Drehmomentübertragung ein besonders geringes Gewicht realisiert.

Die Erfindung betrifft weiterhin ein Verfahren zum Herstellen einer Radlagereinheit für ein Kraftfahrzeug, insbesondere einer Radlagereinheit gemäß den Ausführungen im Rahmen dieser Beschreibung, wobei die Radlagereinheit über eine Radnabe, einen Radlagerflansch und ein Radlager zur Drehlagerung der Radnabe an dem Radlagerflansch verfügt, wobei die Radnabe eine Durchgangsöffnung zur Aufnahme eines mittels eines Schraubverbindungselements an der Radnabe befestigten Wellenzapfens aufweist und an einer die Durchgangsöffnung begrenzen Innenumfangsfläche eine Innenverzahnung zum drehfesten Zusammenwirken mit einer Außenverzahnung des Wellenzapfens ausgebildet ist, und wobei die Durchgangsöffnung unter Ausbildung einer Mündungsöffnung eine zur Anlage einer Anlagefläche des Schraubverbindungselements ausgebildete Anlageschulter durchgreift.

Dabei ist vorgesehen, dass die Anlageschulter zumindest teilweise von Zähnen der Innenverzahnung gebildet ist, die an der Innenumfangsfläche bis hin zu der Mündungsöffnung ausgebildet wird, sodass ein Innendurchmesser der Mündungsöffnung mindestens einem Kopfkreisdurchmesser der Innenverzahnung entspricht und kleiner als ein Fußkreisdurchmesser der Innenverzahnung ist, und dass die Innenverzahnung über einen in der Mündungsöffnung vorliegenden ersten Verzahnungsbereich und einen in axialer Richtung bezüglich einer Längsmittelachse der Durchgangsöffnung von dem ersten Verzahnungsbereich beabstandeten zweiten Verzahnungsbereich verfügt, zwischen welchen ein Teilabschnitt der Durchgangsöffnung mit einem Innendurchmesser ausgebildet wird, der größer ist als der Kopfkreisdurchmesser der Innenverzahnung.

Auf die Vorteile einer derartigen Vorgehensweise beziehungsweise einer derartigen Ausgestaltung der Radlagereinheit wurde bereits hingewiesen. Sowohl die Radlagereinheit als auch das Verfahren zu ihrem Herstellen können gemäß den Ausführungen im Rahmen dieser Beschreibung weitergebildet sein, sodass insoweit auf diese verwiesen wird.

Eine Weiterbildung der Erfindung sieht vor, dass die Innenverzahnung durch Räumen ausgebildet wird, wobei ein Räumwerkzeug die Durchgangsöffnung vollständig durchgreift. Das Räumen ermöglicht ein besonders kostengünstiges Herstellen der Innenverzahnung, weil lediglich das Räumwerkzeug nach Ausbildung der Durchgangsöffnung durch diese hindurch verlagert werden muss, um die Innenverzahnung vollständig auszubilden. Als Räumwerkzeug wird beispielsweise eine Räumnadel oder ein Räumdorn verwendet. Besonders bevorzugt ist das Räumwerkzeug ein einteiliges Räumwerkzeug, sodass nach dem Hindurchführen des Räumwerkzeugs durch die Durchgangsöffnung, insbesondere dem einmaligen Hindurchführen des Räumwerkzeugs, die Innenverzahnung vollständig ausgebildet ist und mithin in ihrer endgültigen Form vorliegt.

Eine Weiterbildung der Erfindung sieht vor, dass der Teilabschnitt vor dem Räumen mit dem Innendurchmesser versehen wird, der größer ist als der Kopfkreisdurchmesser der Innenverzahnung, insbesondere zwischen dem Kopfkreisdurchmesser und einem Fußkreisdurchmesser der Innenverzahnung liegt, dem Fußkreisdurchmesser genau entspricht oder größer ist als der Fußkreisdurchmesser. Bevorzugt erfolgt dies durch spanabtragende Bearbeitung der Radnabe, insbesondere durch Fräsen, Drehen oder dergleichen. Das Herstellen des größeren Innendurchmessers vor dem Räumen führt zu einer geringeren Beanspruchung des Räumwerkzeugs während des Herstellens der Innenverzahnung. Besonders bevorzugt wird der Teilabschnitt zumindest bereichsweise mit einem Innendurchmesser versehen, der zumindest dem Fußkreisdurchmesser der Innenverzahnung entspricht oder größer ist als dieser. Das bedeutet, dass in dem Teilabschnitt zumindest bereichsweise die Innenverzahnung nicht einmal ansatzweise ausgebildet wird. Hierdurch wird eine besonders geringe Beanspruchung des Räumwerkzeugs umgesetzt.

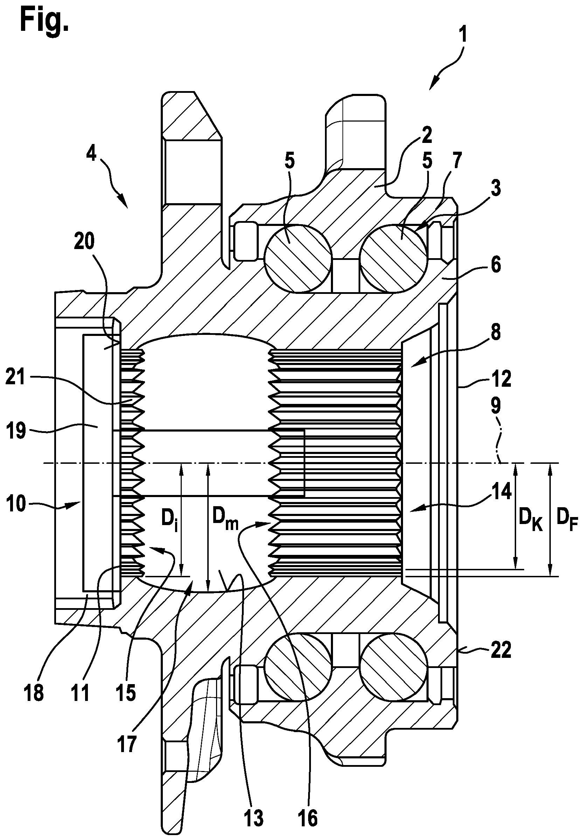

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Radlagereinheit für ein Kraftfahrzeug.

Die Figur zeigt eine schematische Längsschnittdarstellung einer Radlagereinheit 1 für ein Kraftfahrzeug. Die Radlagereinheit 1 verfügt über einen Radlagerflansch 2, an welchem über ein Radlager 3 eine Radnabe 4 drehbar gelagert ist. An der Radnabe 4 ist schlussendlich ein Rad des Kraftfahrzeugs befestigbar, sodass das Rad nach seiner Montage bezüglich des Radlagerflanschs 2 und mittels einer Karosserie des Kraftfahrzeugs drehbar gelagert ist. Das Radlager 3 ist als Wälzlager ausgeführt und verfügt insoweit über mehrere Wälzkörper 5, die zwischen einem Innenring 6 und einem Außenring 7 des Radlagers 3 angeordnet sind. In dem hier dargestellten Ausführungsbeispiel ist der Innenring 6 einstückig und materialeinheitlich mit der Radnabe 4 und der Außenring 7 einstückig und materialeinheitlich mit dem Radlagerflansch 2 ausgeführt. Selbstverständlich können der Innenring 6 und der Au-ßenring 7 - jeweils optional - auch als separate Elemente vorliegen, welche entsprechend an der Radnabe 4 beziehungsweise dem Radlagerflansch 2 angeordnet beziehungsweise befestigt sind.

Die Radnabe 4 weist eine Durchgangsöffnung 8 auf, in welcher in axialer Richtung bezüglich einer Längsmittelachse 9 der Durchgangsöffnung 8 ein als Schraube 10 ausgestaltetes Schraubverbindungselement und andererseits ein hier nicht dargestellter Wellenzapfen einer Kopplungseinrichtung eingreift. Die Schraube 10 dient einem Festsetzen des Wellenzapfens in der Durchgangsöffnung 8. Alternativ kann hierzu das ausgestaltetes Schraubverbindungselement als Schraubenmutter vorliegen. Die Schraube 10 durchgreift eine Mündungsöffnung 11 der Durchgangsöffnung 8 und der Wellenzapfen eine weitere Mündungsöffnung 12. Die Mündungsöffnungen 11 und 12 begrenzen die Durchgangsöffnung 8 in axialer Richtung auf gegenüberliegenden Seiten in radialer Richtung nach außen wird die Durchgangsöffnung 8 von einer Innenumfangsfläche 13 begrenzt.

An der Innenumfangsfläche 13 ist eine Innenverzahnung 14 ausgebildet, die zum drehfesten Zusammenwirken mit einer Außenverzahnung des Wellenzapfens vorgesehen und ausgebildet ist. Die Innenverzahnung 14 ist zumindest in einem ersten Verzahnungsbereich 15 und einem zweiten Verzahnungsbereich 16 ausgebildet, die in axialer Richtung bezüglich der Längsmittelachse 9 voneinander beabstandet sind. In axialer Richtung gesehen liegt zwischen den Verzahnungsbereichen 15 und 16 ein Teilabschnitt 17 der Durchgangsöffnung 8 vor.

Auf der der Durchgangsöffnung 8 abgewandten Seite der Mündungsöffnung 11 liegt eine Schraubverbindungsaufnahme 18 vor, die einer Aufnahme eines Schraubenkopfs 19 der Schraube 10 dient. Nach der Montage der Radlagereinheit 1 liegt der Schraubenkopf 19 an einer Anlageschulter 20 an, welche die Mündungsöffnung 11 in Umfangsrichtung zumindest teilweise, bevorzugt jedoch vollständig, umgreift. Die Anlageschulter 20 ist bevorzugt durchgehend plan und liegt vollständig in einer gedachten Ebene, welche auch die Mündungsöffnung 11 vollständig aufnimmt.

Die Anlageschulter 20 wird zumindest bereichswiese von Zähnen 21 der Innenverzahnung 14 des ersten Verzahnungsbereichs 15 gebildet. Hierzu erstreckt sich die Innenverzahnung 14 bis hin zu der Mündungsöffnung 11. Dies führt dazu, das die Anlageschulter 20 die Mündungsöffnung 11 ringförmig umgreift. Auf der der Anlageschulter 20 gegenüberliegenden Seite der Radnabe 4 liegt an dieser eine Anlagefläche 22 vor, welche eine Abstützung der nicht gezeigten Kopplungseinrichtung in axialer Richtung dient. Nach der Montage der Radlagereinheit 1 liegt insoweit der Schraubenkopf 19 an der Anlageschulter 20 und die Kopplungseinrichtung an der Anlagefläche 22 an, während gleichzeitig die Schraube 10 in einen Wellenzapfen der Kopplungseinrichtung fixierend eingreift, welcher durch die weitere Mündungsöffnung 12 in die Durchgangsöffnung 8 hineinragt. Insoweit ist mittels der Schraube 10 der Wellenzapfen beziehungsweise die Kopplungseinrichtung sicher an der Radnabe 4 in axialer Richtung fixiert. Durch das Zusammenwirken der Innenverzahnung 14 mit der Außenverzahnung des Wellenzapfens sind zudem der Wellenzapfen und die Radnabe 4 in Umfangsrichtung gegeneinander festgelegt.

Um eine besonders kostengünstige Herstellung der Radlagereinheit 1 und insbesondere der Radnabe 4 zu erzielen, soll die Innenverzahnung 14 durch Räumen ausgebildet werden, wobei ein Räumwerkzeug durch die Durchgangsöffnung 8 hindurchgeführt wird. Dies bedingt, dass die Mündungsöffnung 11 einen entsprechend großen Durchmesser aufweisen muss. Um dennoch eine hinreichende Dauerfestigkeit der Radlagereinheit 1 zu erzielen, soll die Anlageschulter 20 - wie bereits erwähnt - zumindest teilweise durch die Zähne 21 der Innerverzahnung 14 des ersten Verzahnungsbereichs 15 gebildet sein. Das bedeutet, dass ein Innendurchmesser Dᵢ der Durchgangsöffnung 8 in den ersten Verzahnungsbereich 15 mindestens einen Kopfkreisdurchmesser D_{K} der Innenverzahnung 14 entspricht und kleiner ist als ein Fußkreisdurchmesser D_{F} der Innenverzahnung 14 ist. In anderen Worten gilt: D_{K} ≤ Dᵢ < D_{F}.

Um eine besonders geringe Beanspruchung des Räumwerkzeugs zu erzielen und zudem die Radlagereinheit 1 so leichtgewichtig wie möglich auszugestalten, ist es zudem vorgesehen, dass die Durchgangsöffnung 8 in dem Teilabschnitt 17 einen Innendurchmesser aufweist, der größer ist als der Kopfkreisdurchmesser D_{K} der Innenverzahnung 14. Bevorzugt ist es vorgesehen, dass sich der Innendurchmesser des Teilabschnitts 17 ausgehend von dem ersten Verzahnungsbereich 15 bis zu einem Maximaldurchmesser Dₘ vergrößert und sich anschließend wieder bis hin zu dem zweiten Verzahnungsbereich 16 verkleinert. Der Maximaldurchmesser Dₘ ist hierbei zumindest größer als der Kopfkreisdurchmesser D_{K} der Innenverzahnung 14, besonders bevorzugt entspricht er jedoch mindestens dem Fußkreisdurchmesser D_{F}. Letzteres führt dazu, dass die Innenverzahnung 14 in dem Teilabschnitt 17 nicht einmal ansatzweise ausgebildet ist, sodass die Innenverzahnung 14 in dem Teilabschnitt 17 zumindest bereichsweise unterbrochen ist.

Die beschriebene Ausgestaltung der Radlagereinheit 1 ermöglicht zum einen eine besonders kostengünstige und einfache Ausgestaltung und weist zum anderen ein besonders geringes Gewicht auf.

### BEZUGSZEICHENLISTE:

- 1: Radlagereinheit
- 2: Radlagerflansch
- 3: Radlager
- 4: Radnabe
- 5: Wälzkörper
- 6: Innenring
- 7: Außenring
- 8: Durchgangsöffnung
- 9: Längsmittelachse
- 10: Schraube
- 11: Mündungsöffnung
- 12: Mündungsöffnung
- 13: Innenumfangsfläche
- 14: Innenverzahnung
- 15: 1. Verzahnungsbereich
- 16: 2. Verzahnungsbereich
- 17: Teilabschnitt
- 18: Schraubverbindungsaufnahme
- 19: Schraubenkopf
- 20: Anlagenschulter
- 21: Zähne
- 22: Anlagenfläche

## Patentansprüche

1. Radlagereinheit (1) für ein Kraftfahrzeug, mit einer Radnabe (4), einem Radlagerflansch (2) und einem Radlager (3) zur Drehlagerung der Radnabe (4) an dem Radlagerflansch (2), wobei die Radnabe (4) eine Durchgangsöffnung (8) zur Aufnahme eines mittels eines Schraubverbindungselements (10) an der Radnabe (4) befestigten Wellenzapfens aufweist und an einer die Durchgangsöffnung (8) begrenzenden Innenumfangsfläche (13) eine Innenverzahnung (14) zum drehfesten Zusammenwirken mit einer Außenverzahnung des Wellenzapfens ausgebildet ist, und wobei die Durchgangsöffnung (8) unter Ausbildung einer Mündungsöffnung (11) eine zur Anlage einer Anlagefläche des Schraubverbindungselements (10) ausgebildete Anlageschulter (20) durchgreift, **dadurch gekennzeichnet, dass** die Anlageschulter (20) zumindest teilweise von Zähnen (21) der Innenverzahnung (14) gebildet ist, die an der Innenumfangsfläche (13) bis hin zu der Mündungsöffnung (11) ausgebildet ist, sodass ein Innendurchmesser (Dᵢ) der Mündungsöffnung (11) mindestens einem Kopfkreisdurchmesser (D_{K}) der Innenverzahnung (14) entspricht und kleiner als ein Fußkreisdurchmesser (D_{F}) der Innenverzahnung (14) ist, und dass die Innenverzahnung (14) über einen in der Mündungsöffnung (11) vorliegenden ersten Verzahnungsbereich (15) und einen in axialer Richtung bezüglich einer Längsmittelachse (9) der Durchgangsöffnung (8) von dem ersten Verzahnungsbereich (15) beabstandeten zweiten Verzahnungsbereich (16) verfügt, zwischen welchen ein Teilabschnitt (17) der Durchgangsöffnung (8) mit einem Innendurchmesser ausgebildet ist, der größer ist als der Kopfkreisdurchmesser (D_{K}) der Innenverzahnung (14).

2. Radlagereinheit nach Anspruch 1, **dadurch gekennzeichnet, dass** der Innendurchmesser des Teilabschnitts (17) der Durchgangsöffnung (8) zumindest bereichsweise mindestens dem Fußkreisdurchmesser (D_{F}) entspricht, sodass die Innenverzahnung (14) in dem Teilabschnitt (17) unterbrochen ist.

3. Radlagereinheit nach einem der vorhergehenden Ansprüche, **dadurch gekennzeichnet, dass** sich der Innendurchmesser des Teilabschnitts (17) ausgehend von dem ersten Verzahnungsbereich (15) bis zu einem Maximaldurchmesser (Dₘ) vergrößert und sich anschließend bis hin zu dem zweiten Verzahnungsbereich (16) verkleinert.

4. Radlagereinheit nach einem der vorhergehenden Ansprüche, **dadurch gekennzeichnet, dass** der Teilabschnitt (17) eine Erstreckung in axialer Richtung aufweist, die einer Erstreckung des zweiten Verzahnungsbereichs (16) in derselben Richtung entspricht oder größer oder kleiner ist, und/oder dass der erste Verzahnungsbereich (15) eine Erstreckung in axialer Richtung aufweist, die kleiner ist als die Erstreckung des zweiten Verzahnungsbereichs (16) oder des Teilabschnitts (17) in derselben Richtung.

5. Radlagereinheit nach einem der vorhergehenden Ansprüche, **dadurch gekennzeichnet, dass** der Wellenzapfen durch eine der Mündungsöffnung (11) in axialer Richtung abgewandte weitere Mündungsöffnung (12) in die Durchgangsöffnung (8) eingreift und entweder beabstandet von der Mündungsöffnung (11) endet oder die Durchgangsöffnung (8) vollständig durchgreift und durch die Mündungsöffnung (11) aus der Durchgangsöffnung (8) herausragt.

6. Radlagereinheit nach einem der vorhergehenden Ansprüche, **dadurch gekennzeichnet, dass** der Wellenzapfen den zweiten Verzahnungsbereich (16) vollständig durchgreift und in den Teilabschnitt (17) der Durchgangsöffnung (8) hineinragt, jedoch von dem ersten Verzahnungsbereich (15) beabstandet endet.

7. Radlagereinheit nach einem der vorhergehenden Ansprüche, **dadurch gekennzeichnet, dass** die weitere Mündungsöffnung (12) vollständig in einer gedachten Ebene liegt, die senkrecht auf der Längsmittelachse (9) steht, wobei die gedachte Ebene eine Anlagefläche (22) für eine den Wellenzapfen aufweisende Kopplungseinrichtung vollständig aufnimmt und in axialer Richtung von dem zweiten Verzahnungsbereich (16) beabstandet angeordnet ist.

8. Verfahren zum Herstellen einer Radlagereinheit (1) für ein Kraftfahrzeug nach einem oder mehreren der vorhergehenden Ansprüche, wobei die Radlagereinheit (1) über eine Radnabe (4), einen Radlagerflansch (2) und ein Radlager (3) zur Drehlagerung der Radnabe (4) an dem Radlagerflansch (2) verfügt, wobei die Radnabe (4) eine Durchgangsöffnung (8) zur Aufnahme eines mittels eines Schraubverbindungselements (10) an der Radnabe (4) befestigten Wellenzapfens aufweist und an einer die Durchgangsöffnung (8) begrenzenden Innenumfangsfläche (13) eine Innenverzahnung (14) zum drehfesten Zusammenwirken mit einer Außenverzahnung des Wellenzapfens ausgebildet ist, und wobei die Durchgangsöffnung (8) unter Ausbildung einer Mündungsöffnung (11) eine zur Anlage einer Anlagefläche des Schraubverbindungselements (10) ausgebildete Anlageschulter (20) durchgreift, **dadurch gekennzeichnet, dass** die Anlageschulter (20) zumindest teilweise von Zähnen (21) der Innenverzahnung (14) gebildet ist, die an der Innenumfangsfläche (13) bis hin zu der Mündungsöffnung (11) ausgebildet wird, sodass ein Innendurchmesser (Dᵢ) der Mündungsöffnung (11) mindestens einem Kopfkreisdurchmesser (D_{K}) der Innenverzahnung (14) entspricht und kleiner als ein Fußkreisdurchmesser (D_{F}) der Innenverzahnung (14) ist, und dass die Innenverzahnung (14) über einen in der Mündungsöffnung (11) vorliegenden ersten Verzahnungsbereich (15) und einen in axialer Richtung bezüglich einer Längsmittelachse (9) der Durchgangsöffnung (8) von dem ersten Verzahnungsbereich (15) beabstandeten zweiten Verzahnungsbereich (16) verfügt, zwischen welchen ein Teilabschnitt (17) der Durchgangsöffnung (8) mit einem Innendurchmesser ausgebildet wird, der größer ist als der Kopfkreisdurchmesser (D_{K}) der Innenverzahnung (14).

9. Verfahren nach Anspruch 8, **dadurch gekennzeichnet, dass** die Innenverzahnung (14) durch Räumen ausgebildet wird, wobei ein Räumwerkzeug die Durchgangsöffnung (8) vollständig durchgreift.

10. Verfahren nach Anspruch 8 oder 9, **dadurch gekennzeichnet, dass** der Teilabschnitt (17) vor dem Räumen mit dem Innendurchmesser versehen wird, der größer ist als der Kopfkreisdurchmesser (D_{K}) der Innenverzahnung (14).

## Claims

1. Wheel bearing unit (1) for a motor vehicle, having a wheel hub (4), a wheel bearing flange (2) and a wheel bearing (3) for the rotational mounting of the wheel hub (4) on the wheel bearing flange (2), wherein the wheel hub (4) has a through opening (8) for the reception of a shaft journal fastened by means of a screw connecting element (10) to the wheel hub (4) and at an inner peripheral surface (13) delimiting the through opening (8) is formed an inner toothing (14) for the non-rotational interaction with an outer toothing of the shaft journal, and wherein the through opening (8) engages through an abutment shoulder (20) formed for the abutment of an abutment surface of the screw connecting element (10), forming a mouth opening (11), **characterised in that** the abutment shoulder (20) is formed at least partially by teeth (21) of the inner toothing (14) which is formed on the inner peripheral surface (13) as far as the mouth opening (11), so that an inner diameter (Dᵢ) of the mouth opening (11) is equal at least to a tip diameter (D_{K}) of the inner toothing (14) and is smaller than a root diameter (D_{F}) of the inner toothing (14), and that the inner toothing (14) has a first toothing region (15) present in the mouth opening (11) and a second toothing region (16) spaced from the first toothing region (15) in axial direction with respect to a longitudinal central axis (9) of the through opening (8), between which a partial section (17) of the through opening (8) is designed with an inner diameter which is greater than the tip diameter (D_{K}) of the inner toothing (14).

2. Wheel bearing according to claim 1,**characterised in that** the inner diameter of the partial section (17) of the through opening (8) is equal in some regions at least to the root diameter (D_{F}), so that the inner toothing (14) in the partial section (17) is interrupted.

3. Wheel bearing unit according to any of the preceding claims,**characterised in that** the inner diameter of the partial section (17) increases starting from the first toothing region (15) as far as a maximum diameter (Dₘ) and subsequently decreases as far as the second toothing region (16).

4. Wheel bearing unit according to any of the preceding claims, **characterised in that** the partial section (17) has an extension in axial direction which is equal to or is greater than or smaller than an extension of the second toothing region (16) in the same direction and/or that the first toothing region (15) has an extension in axial direction which is smaller than the extension of the second toothing region (16) or of the partial section (17) in the same direction.

5. Wheel bearing unit according to any of the preceding claims, **characterised in that** the shaft journal engages through a further mouth opening (12), facing away from the mouth opening (11) in axial direction, into the through opening (8) and either ends spaced from the mouth opening (11) or engages completely through the through opening (8) and projects through the mouth opening (11) from the through opening (8).

6. Wheel bearing unit according to any of the previous claims, **characterised in that** the shaft journal engages completely through the second toothing region (16) and protrudes into the partial section (17) of the through opening (8), but ends spaced from the first toothing region (15).

7. Wheel bearing unit according to any of the preceding claims, **characterised in that** the further mouth opening (12) is situated completely on an imaginary plane which stands perpendicularly on the longitudinal central axis (9), wherein the imaginary plane accommodates completely an abutment surface (22) for a coupling apparatus having the shaft journal and is arranged in axial direction spaced from the second toothing region (16).

8. Method for producing a wheel bearing unit (1) for a motor vehicle according to one or more of the preceding claims, wherein the wheel bearing unit (1) has a wheel hub (4), a wheel bearing flange (2) and a wheel bearing (3) for the rotational mounting of the wheel hub (4) on the wheel bearing flange (2), wherein the wheel hub (4) has a through opening (8) for the reception of a shaft journal fastened to the wheel hub (4) by means of a screw connecting element (10) and on an inner peripheral surface (13) delimiting the through opening (8) is formed an inner toothing (14) for the non-rotational interaction with an outer toothing of the shaft journal, and wherein the through opening (8) engages through an abutment shoulder (20) formed for the abutment of an abutment surface of the screw connecting element (10), forming a mouth opening (11),**characterised in that** the abutment shoulder (20) is formed at least partially by teeth (21) of the inner toothing which is formed on the inner peripheral surface (13) as far as the mouth opening (11), so that an inner diameter (Dᵢ) of the mouth opening (11) is equal to at least one tip diameter (D_{K}) of the inner toothing (14) and is smaller than a root diameter (D_{F}) of the inner toothing (14), and that the inner toothing (14) has a first toothing region (15) present in the mouth opening (11) and a second toothing region (16) spaced from the first toothing region (15) in axial direction with respect to a longitudinal central axis (9) of the through opening (8), between which a partial section (17) of the through opening (8) is designed with an inner diameter which is greater than the tip diameter (D_{K}) of the inner toothing (14).

9. Method according to claim 8,**characterised in that** the inner toothing (14) is formed by broaching, wherein a broaching tool passes completely through the through opening (8).

10. Method according to claim 8 or 9, **characterised in that** the partial section (17) is equipped, prior to the broaching, with an inner diameter which is greater than the tip diameter (D_{K}) of the inner toothing (14).

## Revendications

1. Unité de roulement de roue (1) pour un véhicule automobile, avec un moyeu de roue (4), une bride de roulement de roue (2) et un roulement de roue (3) pour le logement rotatif du moyeu de roue (4) au niveau de la bride de roulement de roue (2), dans laquelle le moyeu de roue (4) présente une ouverture débouchante (8) pour la réception d'un tourillon fixé au moyen d'un élément de liaison par vis (10) au moyeu de roue (4) et une denture intérieure (14) est réalisée au niveau d'une surface périphérique intérieure (13) délimitant l'ouverture débouchante (8) pour la coopération résistante à la rotation avec une denture extérieure du tourillon, et dans laquelle l'ouverture débouchante (8) traverse en réalisant une ouverture d'embouchure (11) un épaulement d'appui (20) réalisé pour l'appui d'une surface d'appui de l'élément de liaison par vis (10), **caractérisée en ce que** l'épaulement d'appui (20) est formé au moins partiellement par des dents (21) de la denture intérieure (14) qui est réalisée au niveau de la surface périphérique intérieure (13) jusqu'à l'ouverture d'embouchure (11) de sorte qu'un diamètre intérieur (Dᵢ) de l'ouverture d'embouchure (11) corresponde à au moins un diamètre de cercle de tête (D_{K}) de la denture intérieure (14) et soit inférieur à un diamètre de cercle de pied (D_{F}) de la denture intérieure (14), et que la denture intérieure (14) dispose d'une première zone de denture (15) se présentant dans l'ouverture d'embouchure (11) et d'une seconde zone de denture (16) espacée dans le sens axial par rapport à l'axe médian longitudinal (9) de l'ouverture débouchante (8), de la première zone de denture (15), entre lesquelles une section partielle (17) de l'ouverture débouchante (8) est réalisée avec un diamètre intérieur qui est supérieur au diamètre de cercle de tête (D_{K}) de la denture intérieure (14).

2. Unité de roulement de roue selon la revendication 1, **caractérisée en ce que** le diamètre intérieur de la section partielle (17) de l'ouverture débouchante (8) correspond au moins par endroits au moins au diamètre de cercle de pied (D_{F}) de sorte que la denture intérieure (14) soit interrompue dans la section partielle (17).

3. Unité de roulement de roue selon l'une quelconque des revendications précédentes, **caractérisée en ce que** le diamètre intérieur de la section partielle (17) s'agrandit à partir de la première zone de denture (15) jusqu'à un diamètre maximal (Dₘ) et se réduit ensuite jusqu'à la seconde zone de denture (16).

4. Unité de roulement de roue selon l'une quelconque des revendications précédentes, **caractérisée en ce que** la section partielle (17) présente une étendue dans le sens axial qui correspond ou est supérieure ou inférieure à une étendue de la seconde zone de denture (16) dans le même sens et/ou que la première zone de denture (15) présente une étendue dans le sens axial qui est inférieure à l'étendue de la seconde zone de denture (16) ou de la section partielle (17) dans le même sens.

5. Unité de roulement de roue selon l'une quelconque des revendications précédentes, **caractérisée en ce que** le tourillon vient en prise par une autre ouverture d'embouchure (12) éloignée de l'ouverture d'embouchure (11) dans le sens axial dans l'ouverture débouchante (8) et se termine à distance de l'ouverture d'embouchure (11) ou traverse complètement l'ouverture débouchante (8) et dépasse par l'ouverture d'embouchure (11) hors de l'ouverture débouchante (8).

6. Unité de roulement de roue selon l'une quelconque des revendications précédentes, **caractérisée en ce que** le tourillon traverse complètement la seconde zone de denture (16) et pénètre dans la section partielle (17) de l'ouverture débouchante (8), toutefois se termine à distance de la première zone de denture (15).

7. Unité de roulement de roue selon l'une quelconque des revendications précédentes, **caractérisée en ce que** l'autre ouverture d'embouchure (12) se trouve complètement dans un plan imaginaire qui se situe perpendiculairement sur l'axe médian longitudinal (9), dans lequel le plan imaginaire reçoit complètement une surface d'appui (22) pour un dispositif de couplage présentant le tourillon et est agencé dans le sens axial à distance de la seconde zone de denture (16).

8. Procédé de fabrication d'une unité de roulement de roue (1) pour un véhicule automobile selon l'une ou plusieurs quelconques des revendications précédentes, dans lequel l'unité de roulement de roue (1) dispose d'un moyeu de roue (4), d'une bride de roulement de roue (2) et d'un roulement de roue (3) pour le logement rotatif du moyeu de roue (4) au niveau de la bride de roulement de roue (2), dans lequel le moyeu de roue (4) présente une ouverture débouchante (8) pour la réception d'un tourillon fixé au moyen d'un élément de liaison par vis (10) au moyeu de roue (4) et une denture intérieure (14) est réalisée au niveau d'une surface périphérique intérieure (13) limitant l'ouverture débouchante (8) pour la coopération résistante à la rotation avec une denture extérieure du tourillon, et dans lequel l'ouverture débouchante (8) traverse en réalisant une ouverture d'embouchure (11) un épaulement d'appui (20) réalisé pour l'appui d'une surface d'appui de l'élément de liaison par vis (10), **caractérisé en ce que** l'épaulement d'appui (20) est formé au moins partiellement par des dents (21) de la denture intérieure (14), qui est réalisée au niveau de la surface périphérique intérieure (13) jusqu'à l'ouverture d'embouchure (11) de sorte qu'un diamètre intérieur (Dᵢ) de l'ouverture d'embouchure (11) corresponde à au moins un diamètre de cercle de tête (D_{K}) de la denture intérieure (14) et soit inférieur à un diamètre de cercle de pied (D_{F}) de la denture intérieure (14), et que la denture intérieure (14) dispose d'une première zone de denture (15) se présentant dans l'ouverture d'embouchure (11) et d'une seconde zone de denture (16) espacée dans le sens axial par rapport à l'axe médian longitudinal (9) de l'ouverture débouchante (8) de la première zone de denture (15), entre lesquelles une section partielle (17) de l'ouverture débouchante (8) est réalisée avec un diamètre intérieur qui est supérieur au diamètre de cercle de tête (D_{K}) de la denture intérieure (14).

9. Procédé selon la revendication 8, **caractérisé en ce que** la denture intérieure (14) est réalisée par brochage, dans lequel un outil de brochage traverse complètement l'ouverture débouchante (8).

10. Procédé selon la revendication 8 ou 9, **caractérisé en ce que** la section partielle (17) est pourvue avant le brochage du diamètre intérieur qui est supérieur au diamètre de cercle de tête (D_{K}) de la denture intérieure (14).
